# EUROPEAN PATENT SPECIFICATION

(11) **EP 3 156 187 B1**
(45) Date of publication and mention of the grant of the patent: **16.09.2020**
(21) Application number: 15863902.1
(22) Date of filing: 19.11.2015
(51) Int. Cl.: B25F 5/00, B24B 23/02, B24B 41/00, F16D 3/06, F16D 3/12, F16D 3/26

(54) **ROTARY MACHINING TOOL**
DREHENDES ZERSPANUNGSWERKZEUG
OUTIL D'USINAGE ROTATIF

(30) Priority: 25.11.2014 JP 2014237643
(43) Date of publication of application: 19.04.2017
(73) Proprietor: Nitto Kohki Co., Ltd., Tokyo 146-8555 (JP)
(72) Inventor: AOKI, Ryochi, Tokyo 146-8555 (JP); MURAKAMI, Keiichi, Tokyo 146-8555 (JP)
(74) Representative: Williams Powell
(86) International application number: PCT/JP2015/082585
(87) International publication number: WO 2016/084710

(56) References cited:
- EP-A1- 0 427 510
- DE-A1- 1 552 495
- JP-A- 2000 135 636
- JP-A- 2003 191 154
- JP-A- 2011 036 972
- KR-A- 20100 117 890
- US-A- 3 837 121

## Description

### Technical Field:

The present invention relates to rotary machining tools. More particularly, the present invention relates to a rotary machining tool having a shock-absorbing function to absorb reaction force received from a workpiece during a machining operation.

### Background Art:

A pneumatic or electric motor-driven hand-held rotary machining tool may be bounced off a workpiece by a large reaction force suddenly received from the workpiece during a machining operation such as grinding or cutting, for example, when a machining member such as a grinding member or cutting edge, which is being rotationally driven, bites into the workpiece. If such a phenomenon occurs, the rotating machining member may unfavorably contact another point on the workpiece, resulting in damage to the workpiece.

To prevent the bouncing-off phenomenon of rotary machining tools, there has been developed a grinding tool having a shock-absorbing function to absorb reaction force from the workpiece, as disclosed, for example, in Patent Literature 1. In this grinding tool, a shaft extending from a grinding blade is fitted into a tubular rotary drive part of the tool body so that the shaft is slidable in the direction of a longitudinal axis of the rotary drive part. Between the rotary drive part and the grinding blade, a spring is installed in such a manner as to cover the shaft, and thus the grinding blade is pressed forward by the urging force of the spring. The shaft of the grinding blade has a groove formed on the outer peripheral surface thereof to extend in the direction of the longitudinal axis. The groove receives a pin extending inward from the rotary drive part. Engagement of the pin and the groove allows the grinding blade to be displaceable relative to the rotary drive part in the direction of the longitudinal axis and to be fixed relative to the rotary drive part in the rotational direction of the grinding blade. With this structure, when the grinding blade receives reaction force due, for example, to biting into a workpiece, the spring deflects allowing the grinding blade to retract so as to escape from the workpiece. Therefore, the reaction force is absorbed by the spring, and not much reaction force will be transmitted to the tool body that the operator is gripping. Thus, the tool body is prevented from bouncing off even if the grinding blade receives a large reaction force from the workpiece.

### Citation List:

### Patent Literature:

Patent Literature 1: Japanese Patent Application Publication No. JP 1990-95561 A Summary of Invention:

### Technical Problem:

In the above-described conventional grinding tool, disclosed in Patent Literature 1, transmission of rotational driving force between the rotary drive part of the tool body and the shaft of the grinding blade is effected by engagement between the pin and the groove; therefore, a large force is concentratedly applied to the pin during a grinding operation. In particular, when the grinding blade suddenly receives a large reaction force, the pin is momentarily subjected to a large force, which may result in breakage of the pin. The pin also causes stress concentration in a very narrow region of the groove. Therefore, it is likely that the pin may damage or dent the side surface of the groove. Damage or dent on the side surface of the groove increases sliding resistance between the pin and the groove, so that the grinding blade may be unable to smoothly retract when receiving reaction force, resulting in being impossible to absorb the reaction force appropriately.

In view of the above-described problems associated with the conventional technique, an object of the present invention is to provide a rotary machining tool capable of improving durability of a part constituting a shock-absorbing function to absorb reaction force that the machining tool receives during a machining operation such as grinding or cutting. Other designs of prior art tools are disclosed in KR-2010/0117890, US-3,837,121, EP-0,427,510 which disclose a rotary machining tool according to the preamble of claim 1.

### Solution to Problem:

The present invention provides a rotary machining tool as specified in claim 1. The tool comprises a tool body incorporating a motor and a rotary drive shaft drivably connected to the motor. The rotary drive shaft comprises a first shaft member having a base end drivably connected to the motor and further having a tip end, and a second shaft member having a base end drivably connected to the tip end of the first shaft member and further having a tip end to which a machining member is attached. The rotary drive shaft further comprises an elastic member set between the first shaft member and the second shaft member to allow movement of the second shaft member toward the first shaft member while being elastically deformed. The tip end of the first shaft member has a first sliding surface extending parallel to a longitudinal axis of the rotary drive shaft, and the base end of the second shaft member has a second sliding surface extending parallel to the longitudinal axis and slidingly engageable with the first sliding surface, so that sliding engagement of the first sliding surface and the second sliding surface allows the second shaft member to be displaceable relative to the first shaft member in the direction of the longitudinal axis and to be fixed relative to the first shaft member in the direction of rotation of the rotary drive shaft.

In this rotary machining tool, engagement between the first shaft member and the second shaft member in the rotational direction is effected through surface contact between the first sliding surface and the second sliding surface. Therefore, particularly when the rotary machining tool receives reaction force from a workpiece during a machining operation, local stress concentration is less likely to occur than in the case of sliding engagement between a pin and a groove as in the conventional structure. Accordingly, it is possible to reduce the possibility of breakage of the joint between the first shaft member and the second shaft member.

According to the invention, the rotary machining tool is arranged as follows. The tip end of the first shaft member has one of a projection and recess which extend in the direction of the longitudinal axis and which are slidingly engageable with each other, and the first sliding surface is formed on a side surface of the one of the projection and recess. The base end of the second shaft member has the other of the projection and recess, and the second sliding surface is formed on a side surface of the other of the projection and recess.

According to the invention, the rotary machining tool is arranged as follows. The projection is provided with a slot extending therethrough in a direction traversing the longitudinal axis and elongated in the direction of the longitudinal axis, and the recess is provided with a shaft part extending in the direction traversing the longitudinal axis and received in the slot in the projection.

With the above-described structure, the movable range of the second shaft member relative to the first shaft member in the direction of the longitudinal axis can be limited within a range in which the shaft part abuts against the opposite end surfaces of the slot. It should be noted that, because the second shaft member is fixed relative to the first shaft member in the rotational direction by engagement between the first sliding surface and the second sliding surface, breakage of the shaft part can also be prevented by arranging so that the shaft part and either of the side surfaces of the slot cannot directly engage each other and so that no force in the rotational direction is applied to the shaft part.

The arrangement may be as follows. At least one of the first shaft member and the second shaft member has an elastic member accommodating hole extending in the direction of the longitudinal axis. The elastic member is inserted and retained in the elastic member accommodating hole so that one end of the elastic member abuts against the first shaft member, and that the other end of the elastic member abuts against the second shaft member.

With the structure in which the elastic member is accommodated in the rotary drive shaft, it is possible to reduce the overall outer diameter of the rotary drive shaft as compared with the conventional structure in which the spring is disposed in such a manner as to cover the outer peripheral surface of the shaft.

The rotary machining tool may further comprise the following members: a tubular shaft retaining member extending from the tool body in the direction of the longitudinal axis so as to cover the outer peripheral surfaces of the first and second shaft members; a first bearing member retained by the inner peripheral surface of the shaft retaining member to rotatably support the first shaft member; and a second bearing member retained by the inner peripheral surface of the shaft retaining member to rotatably support the second shaft member.

The first and second shaft members of the rotary drive shaft, which rotates at high speed during a machining operation, is covered with the shaft retaining member. Accordingly, it is possible to reduce the danger that an operator may mistakenly touch the rotary drive shaft and suffer an injury to his or her hand. In addition, because the first and second shaft members are supported by the first and second bearing members, respectively, it is also possible to suppress the axial run-out of the shaft members during rotation and hence possible to carry out a machining operation in an even more stable state.

Embodiments of a rotary machining tool according to the present invention will be explained below on the basis of the accompanying drawings.

### Brief Description of Drawings:

Fig. 1 is a sectional side view of a grinding tool according to the present invention.
Fig. 2 is an exploded perspective view of a joint between a first shaft member and a second shaft member.
Fig. 3 is a sectional view taken along the line III-III in Fig. 1, showing the grinding tool when a starting operation member is in a stop position.
Fig. 4 is a sectional view taken along the line III-III in Fig. 1, showing the grinding tool when the starting operation member is in a drive position and a switching operation member is in a forward position.
Fig. 5 is a sectional view taken along the line V-V in Fig. 4.
Fig. 6 is a fragmentary sectional side view of the grinding tool when the starting operation member is in the drive position.
Fig. 7 is a sectional view taken along the line VII-VII in Fig. 1.
Fig. 8 is a sectional view taken along the line III-III in Fig. 1, showing the grinding tool when the starting operation member is in the drive position and the switching operation member is in a reverse position.
Fig. 9 is a sectional view taken along the line IX-IX in Fig. 8.
Fig. 10 is a sectional view taken along the line V-V in Fig. 4, showing the way in which the flow rate of compressed air is limited by the switching operation member. Description of Embodiments:

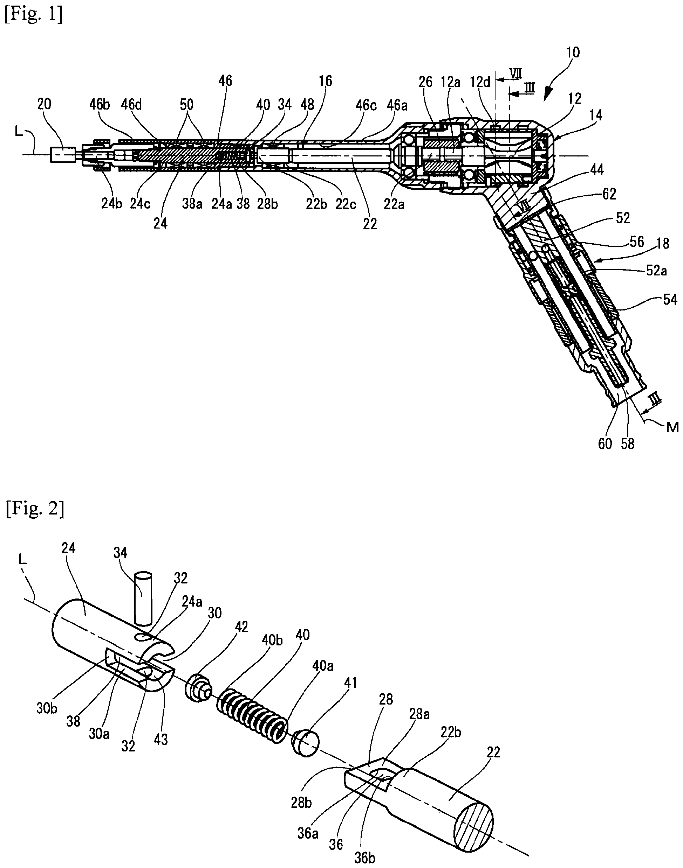

As shown in Fig. 1, a grinding tool 10 according to one embodiment of the present invention is a pneumatic grinding tool 10 comprising a tool body 14 incorporating an air motor 12, a rotary drive shaft 16 drivably connected to the air motor 12, and an operating part 18 for an operator to grip and control the starting of the air motor 12 and the rotational direction thereof. The grinding tool 10 is configured to grind a workpiece by rotating with the air motor 12 a grinding member 20 attached to the tip end of the rotary drive shaft 16 and bringing the rotating grinding member 20 into contact with the workpiece.

The rotary drive shaft 16 drivably connected to the air motor 12 has a first shaft member 22 and a second shaft member 24 connected in alignment with each other in the direction of a longitudinal axis L of the rotary drive shaft 16. The first shaft member 22 has a base end 22a drivably connected to a rotationally driving shaft 12a of the air motor 12 through a coupling 26. A tip end 22b of the first shaft member 22 and a base end 24a of the second shaft member 24 are connected such that the second shaft member 24 is displaceable relative to the first shaft member 22 along the longitudinal axis L but fixed relative to the first shaft member 22 in the rotational direction of the rotary drive shaft 16, as will be explained later.

As shown in Fig. 2, the tip end 22b of the first shaft member 22 is provided with a projection 28 projecting in the direction of the longitudinal axis L, and the base end 24a of the second shaft member 24 is provided with a recess 30 extending in the direction of the longitudinal axis L. The width of the projection 28 is set slightly smaller than the width of the recess 30 so that the projection 28 can be received in the recess 30 slidably in the direction of the longitudinal axis L. The side walls of the recess 30 are respectively provided with pin fitting holes 32 extending therethrough in a direction perpendicularly traversing the longitudinal axis L. A pin 34 is press-fitted into the pin fitting holes 32 to form a shaft part traversing the recess 30. The projection 28 is formed with a slot 36 extending therethrough in a direction perpendicularly traversing the longitudinal axis L and elongated in the direction of the longitudinal axis L. The slot 36 has a width sufficiently large for the pin 34 to pass therethrough. The second shaft member 24 is formed with a spring accommodating hole 38 extending further from a bottom surface 30b of the recess 30 in the direction of the longitudinal axis L and further has spring insertion surfaces 43 with an arcuate cross-section formed on the opposite side surfaces of the recess 30, extending in the direction of the longitudinal axis L contiguously with the spring accommodating hole 38. A coil spring 40 having first and second spring seats 41 and 42 at the opposite ends thereof is received into the spring accommodating hole 38 through the spring insertion surfaces 43. The first shaft member 22 and the second shaft member 24 are connected as follows. The coil spring 40 is received into the spring accommodating hole 38, and the projection 28 is inserted into the recess 30 so that the slot 36 of the projection 28 and the pin fitting holes 32 of the recess 30 are aligned with each other. In this state, the pin 34 is inserted and secured into the pin fitting holes 32 through the slot 36, thereby allowing the first and second shaft members 22 and 24 to be connected displaceably relative to each other in the direction of the longitudinal axis L. When the first shaft member 22 and the second shaft member 24 are connected in this way, one end 40a of the coil spring 40 abuts against a tip end 28b of the projection 28 of the first shaft member 22 through the first spring seat 41, and the other end 40b of the coil spring 40 abuts against a bottom 38a (Fig. 1) of the spring accommodating hole 38 of the second shaft member 24 through the second spring seat 42. Thus, the coil spring 40 presses the second shaft member 24 forward relative to the first shaft member 22. At this time, the pin 34 abuts against a forward end surface 36a of the slot 36 of the first shaft member 22 to limit the forward movement of the second shaft member 24. When the second shaft member 24 is pressed toward the first shaft member 22, the coil spring 40 is elastically deformed to allow the second shaft member 24 to move rearward toward the first shaft member 22 until the pin 34 abuts against a rear end surface 36b of the slot 36. The opposite side surfaces of the projection 28 and the opposite side surfaces of the recess 30 constitute first sliding surfaces 28a and second sliding surfaces 30a, respectively, which extend parallel to the direction of the longitudinal axis L and slidingly engage each other. Sliding engagement of the first sliding surfaces 28a and the second sliding surfaces 30a allows the second shaft member 24 to be displaceable relative to the first shaft member 22 along the longitudinal axis L and to be fixed relative to the first shaft member 22 in the rotational direction of the rotary drive shaft 16. Transmission of rotational driving force from the first shaft member 22 to the second shaft member 24 is effected through surface contact between the first sliding surfaces 28a and the second sliding surfaces 30a; therefore, basically, the pin 34 is not subjected to any force in the rotational direction.

The above-descried structure of the rotary drive shaft 16 provides the following advantage. During a grinding operation, the grinding member 20 attached to a tip end 24b of the second shaft member 24 may be suddenly subjected to a large reaction force from the workpiece due, for example, to the biting of the grinding member 20 into the workpiece. In such a case, the bouncing movement of the grinding member 20 is absorbed by elastic deformation of the coil spring 40, and thus the reaction force is reduced. Therefore, no large reaction force is transmitted to the tool body 14 and the operating part 18. Accordingly, even if the grinding member 20 is bounced off, the tool body 14 and the operating part 18 are prevented from bouncing off.

It should be noted that, although in this embodiment the first shaft member 22 has the projection 28, and the second shaft member 24 has the recess 30, the arrangement may be such that the first shaft member 22 has the recess 30, and the second shaft member 24 has the projection 28. The arrangement may also be such that the pin 34 is secured to the projection 28, and the slot 36 for receiving the pin 34 is provided in the recess 30. Further, the spring accommodating hole 38 may be provided in the first shaft member 22. Alternatively, the spring accommodating hole 38 may comprise two parts provided in the first shaft member 22 and the second shaft member 24, respectively, so that the coil spring 40 is accommodated in the two spring accommodating hole parts, extending over in both the first and second shaft members 22 and 24.

As shown in Fig. 1, the tool body 14 has an air motor 12 and a motor housing 44 accommodating the air motor 12. The motor housing 44 has a tubular shaft retaining member 46 attached thereto. The shaft retaining member 46 extends in the direction of the longitudinal axis L so as to cover an outer peripheral surface 22c of the first shaft member 22 and an outer peripheral surface 24c of the second shaft member 24. The shaft retaining member 46 comprises a proximal member 46a secured to the motor housing 44 and a distal member 46b threadedly engaged with the proximal member 46a. The proximal member 46a of the shaft retaining member 46 has a first bearing member 48 retained by an inner peripheral surface 46c thereof. The first bearing member 48 rotatably supports the first shaft member 22. The distal member 46b of the shaft retaining member 46 has two second bearing members 50 retained by an inner peripheral surface 46d thereof. The second bearing members 50 rotatably support the second shaft member 24. The rotary drive shaft 16 is rotationally driven at high speed by the air motor 12. In this regard, because the rotary drive shaft 16 is covered at the outer periphery thereof by the shaft retaining member 46, it is possible to prevent the operator from mistakenly touching the rotating rotary drive shaft 16 during a grinding operation, which would otherwise cause the operator to be injured. Further, because the elongated rotary drive shaft 16 is supported from the direction of the radius thereof by the first and second bearing members 48 and 50, it is possible to suppress the axial run-out of the first and second shaft members 22 and 24 of the rotary drive shaft 16 during rotation and hence possible to carry out a grinding operation in an even more stable state.

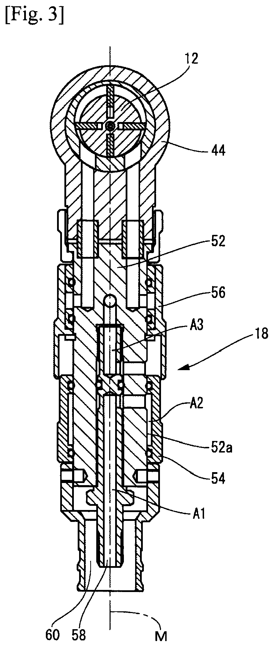

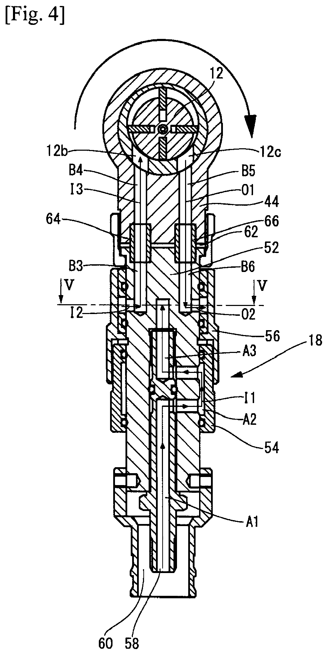

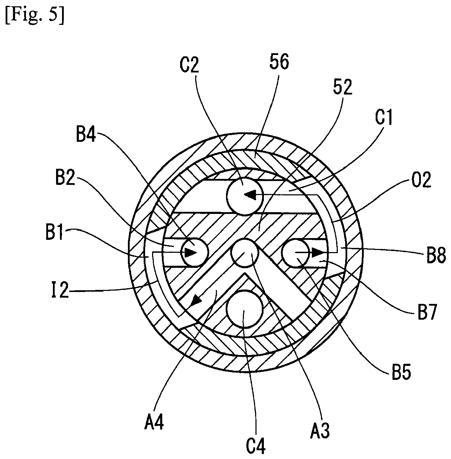

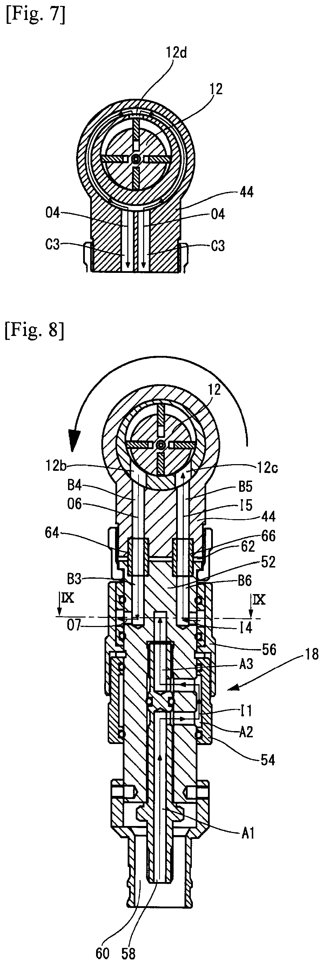

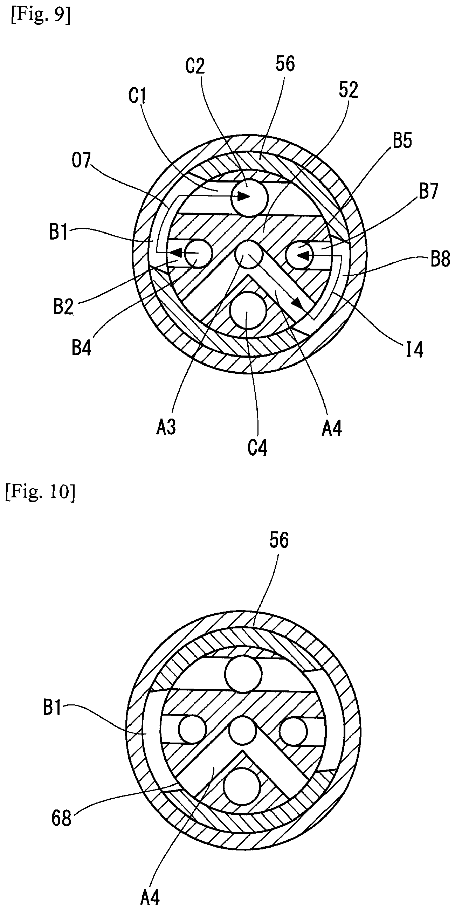

As shown in Figs. 1 and 3, the operating part 18 for controlling the supply of compressed air to the air motor 12 has an operating part body 52 having an air flow path formed therein, a tubular starting operation member 54 disposed over an outer peripheral surface 52a of the operating part body 52 slidably in the direction of a longitudinal axis M of the operating part body 52, and a tubular switching operation member 56 disposed over the outer peripheral surface 52a of the operating part body 52 rotatably in a circumferential direction relative to the longitudinal axis M of the operating part body 52. As will be explained later, the supply of compressed air to the air motor 12 is started by moving the starting operation member 54 upward along the longitudinal axis M from a stop position shown in Fig. 3 to a drive position shown in Fig. 4. The rotational direction of the air motor 12 is switched over from forward rotation (clockwise as seen in Fig. 4) to reverse rotation (counterclockwise as seen in Fig. 8) by rotating the switching operation member 56 from a forward position shown in Fig. 5 to a reverse position shown in Fig. 9.

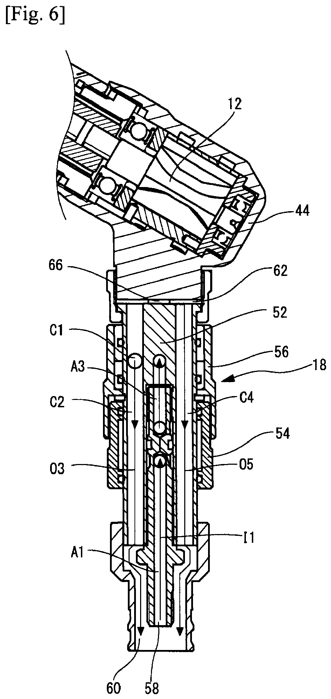

Compressed air from a compressed air supply source (not shown) is introduced from an air supply port 58 of the operating part body 52 and supplied to the air motor 12 through several flow paths, and exhaust air from the air motor 12 flows through other flow path and is discharged from an air discharge port 60. In the state shown in Fig. 3, the starting operation member 54 is in the stop position, and an air supply path A2 communicating with an air supply path A1 extending from the air supply port 58 is not in communication with any other flow path. Accordingly, compressed air is not supplied to the air motor 12, and the air motor 12 is not driven. When the starting operation member 54 is moved to the drive position shown in Fig. 4, the air supply path A2 comes in communication with an air supply path A3. Consequently, compressed air flows in the direction indicated by the arrow I1. The compressed air further flows, as shown by the arrow 12 in Fig. 5, through an air supply path A4, an air supply-discharge path B1 formed in the switching operation member 56 and through an air supply-discharge path B2. Further, the compressed air flows, as shown by the arrow 13 in Fig. 4, through an air supply-discharge path B3 and through an air supply-discharge path B4 in the motor housing 44 and is supplied to the air motor 12 from a first opening 12b of the air motor 12. Consequently, the air motor 12 is driven to rotate clockwise as seen in Fig. 4 by compressed air flowing in from the first opening 12b. Accordingly, the rotary drive shaft 16 and the grinding member 20 are driven to rotate in the forward direction. Compressed air having passed through the air motor 12 is discharged from the air motor 12 through a second opening 12c and flows, as shown by the arrow O1, through an air supply-discharge path B5 and an air supply-discharge path B6. The compressed air further flows, as shown by the arrow O2 in Fig. 5, through an air supply-discharge path B7 and an air supply-discharge path B8 formed in the switching operation member 56 and through an air discharge path C1. Further, the compressed air flows, as shown by the arrow O3 in Fig. 6, through an air discharge path C2 and is discharged from the air discharge port 60. The air motor 12 is, as shown in Fig. 7, provided with a third opening 12d used exclusively for discharging compressed air. Compressed air discharged from the third opening 12d flows through an air discharge path C3 in the motor housing 44 along the arrow O4 and further through an air discharge path C4 as shown by the arrow O5 in Fig. 6 and is discharged from the air discharge port 60. It should be noted that a gap 62 is provided between the motor housing 44 and the operating part body 52 of the operating part 18, through which gap the air discharge path C3 and the air discharge path C4 communicate with each other. Further, as shown in Fig. 4, the air supply-discharge path B3 and the air supply-discharge path B4 are hermetically connected to each other by a connecting pipe 64, and the air supply-discharge path B5 and the air supply-discharge path B6 are hermetically connected to each other by a connecting pipe 66, thereby preventing compressed air supplied to the air motor 12 from leaking into the gap 62.

When the switching operation member 56 is rotated to the position shown in Fig. 9, compressed air having flowed along the arrow I1 (Fig. 8) now flows, as shown by the arrow 14 in Fig. 9, through an air supply path A4 and the air supply-discharge path B8, which is formed in the switching operation member 56, and through the air supply-discharge path B7. Further, the compressed air flows, as shown by the arrow 15 in Fig. 8, through the air supply-discharge path B6 and the air supply-discharge path B5 in the motor housing 44 and is supplied to the air motor 12 from the second opening 12c of the air motor 12. Consequently, the air motor 12 is driven to rotate counterclockwise as seen in Fig. 8 by the compressed air flowing in from the second opening 12c. Accordingly, the rotary drive shaft 16 and the grinding member 20 are driven to rotate in the reverse direction. Compressed air having passed through the air motor 12 is discharged from the air motor 12 through the first opening 12b and flows, as shown by the arrow O6, through the air supply-discharge path B4 and the air supply-discharge path B3. The compressed air further flows, as shown by the arrow O7 in Fig. 9, through the air supply-discharge path B2 and the air supply-discharge path B1, which is formed in the switching operation member 56, and through the air discharge path C1. Further, the compressed air flows, as shown by the arrow O3 in Fig. 6, through the air discharge path C2 and is discharged from the air discharge port 60. It should be noted that, at this time also, exhaust air from the third opening 12d of the air motor 12 is discharged along the route shown by the arrow O4 (Fig. 7) and the arrow O5 (Fig. 6).

Thus, by switching over the position of the switching operation member 56 between the forward position shown in Fig. 5 and the reverse position shown in Fig. 9, the rotational direction of the air motor 12 can be switched over to change the rotational direction of the grinding member 20. Further, if the switching operation member 56 is placed in a position as shown in Fig. 10, for example, so that the switching operation member 56 partially closes an opening 68 of the air supply path A4, it is possible to increase the fluid resistance between the air supply path A4 and the air supply-discharge path B1 and hence possible to reduce the flow rate of compressed air supplied to the air motor 12 and to reduce the rotational speed of the air motor 12. That is, by adjusting the position of the switching operation member 56, the rotational direction of the air motor 12 can be changed over, and the rotational speed of the air motor 12 can also be adjusted.

In this embodiment, the switching operation member 56 for adjusting the rotational direction and rotation speed of the air motor 12 is formed as a member different from the starting operation member 54 for controlling the start and stop of the supply of compressed air. Accordingly, if the air motor 12 is temporarily stopped with the starting operation member 54 after the rotational direction and rotational speed of the air motor 12 have been adjusted with the switching operation member 56, for example, the position of the switching operation member 56 can be held as it is; therefore, if the drive of the air motor 12 is restarted with the starting operation member 54, the air motor 12 is driven to rotate in the same way as before the stoppage. It is therefore unnecessary to adjust the rotational direction and rotational speed of the air motor 12 every time the air motor 12 is started.

In the present invention, the engagement of the first shaft member 22 and the second shaft member 24 in the rotational direction is effected through surface contact between the first sliding surfaces 28a and the second sliding surfaces 30a; therefore, local stress concentration is unlikely to occur as compared with the conventional technique using a point or line contact between a pin and a groove. Accordingly, it is possible to reduce the possibility of breakage of the joint between the first shaft member 22 and the second shaft member 24. Further, because the engagement of the first shaft member 22 and the second shaft member 24 in the rotational direction is effected through surface contact, it is possible to reduce considerably the possibility of formation of irregularities on the sliding surfaces.

It should be noted that, although the above-described embodiment is configured to absorb reaction force by the coil spring 40, other elastic member, e.g. a rubber member, may also be used in place of the coil spring 40. Although the present invention has been explained above with regard to the pneumatic grinding tool 10 using the air motor 12 as a driving source, the present invention may also be applied to a motor-driven grinding tool using an electric motor as a driving source in place of the air motor 12. The present invention may also be applied to other rotary machining tool equipped with other machining member, e.g. a cutting edge, in place of the grinding member 20.

### List of Reference Signs:

Grinding tool 10; air motor 12; rotationally driving shaft 12a; first opening 12b; second opening 12c; third opening 12d; tool body 14; rotary drive shaft 16; operating part 18; grinding member 20; first shaft member 22; base end 22a; tip end 22b; outer peripheral surface 22c; second shaft member 24; base end 24a; tip end 24b; outer peripheral surface 24c; coupling 26; projection 28; first sliding surfaces 28a; tip end 28b; recess 30; second sliding surfaces 30a; bottom surface 30b; pin fitting holes 32; pin 34; slot 36; forward end surface 36a; rear end surface 36b; spring accommodating hole 38; bottom 38a; coil spring 40; first spring seat 41; second spring seat 42; spring insertion surfaces 43; motor housing 44; shaft retaining member 46; proximal member 46a; distal member 46b; inner peripheral surface 46c; inner peripheral surface 46d; first bearing member 48; second bearing members 50; operating part body 52; outer peripheral surface 52a; starting operation member 54; switching operation member 56; air supply port 58; air discharge port 60; gap 62; connecting pipe 64; connecting pipe 66; opening 68; air supply paths A1 to A4; air supply-discharge paths B1 to B8; air discharge paths C1 to C4; longitudinal axis L; longitudinal axis M.

## Claims

1. A rotary machining tool comprising a tool body (14) incorporating a motor (12) and a rotary drive shaft (16) drivably connected to the motor;
the rotary drive shaft (16) comprising:
a first shaft member (22) having a base end (22a) drivably connected to the motor (12) and further having a tip end (22b);
a second shaft member (24) having a base end (24a) drivably connected to the tip end (22b) of the first shaft member (22) and further having a tip end (24b) to which a machining member (20) is attached; and
an elastic member (40) set between the first shaft member (22) and the second shaft member (24) to allow movement of the second shaft member (24) toward the first shaft member (22) while being elastically deformed;
wherein the tip end (22b) of the first shaft member (22) has a first sliding surface extending parallel to a longitudinal axis of the rotary drive shaft (16), and the base end (24a) of the second shaft member (24) has a second sliding surface extending parallel to the longitudinal axis and slidingly engageable with the first sliding surface, so that sliding engagement of the first sliding surface and the second sliding surface allows the second shaft member (24) to be displaceable relative to the first shaft member (22) in a direction of the longitudinal axis and to be fixed relative to the first shaft member (22) in a direction of rotation of the rotary drive shaft (16);
wherein the tip end (22b) of the first shaft member (22) has one of a projection (28) and a recess which extend in the direction of the longitudinal axis and which are slidingly engageable with each other, the first sliding surface being formed on a side surface of the one of the projection (28) and the recess, the base end (24a) of the second shaft member (24) having an other of the projection (28) and the recess, and the second sliding surface being formed on a side surface of the other of the projection (28) and the recess; and
**characterised in that** the projection (28) is provided with a slot (36) extending therethrough in a direction traversing the longitudinal axis and elongated in the direction of the longitudinal axis, the recess being provided with a shaft part (34) extending in the direction traversing the longitudinal axis and received in the slot (36) in the projection.

2. The rotary machining tool of claim 1, wherein at least one of the first shaft member (22) and the second shaft member (24) has an elastic member accommodating hole extending in the direction of the longitudinal axis, the elastic member being inserted and retained in the elastic member accommodating hole so that one end of the elastic member abuts against the first shaft member (22), and that an other end of the elastic member abuts against the second shaft member (24).

3. The rotary machining tool of claim 1 or 2, further comprising: a tubular shaft retaining member extending from the tool body (14) in the direction of the longitudinal axis so as to cover outer peripheral surfaces of the first shaft member (22) and the second shaft member (24); a first bearing member retained by an inner peripheral surface of the shaft retaining member to rotatably support the first shaft member; and a second bearing member retained by an inner peripheral surface of the shaft retaining member to rotatably support the second shaft member (24).

## Patentansprüche

1. Rotationsbearbeitungswerkzeug, aufweisend einen Werkzeugkörper (14), der einen Motor (12) und eine rotierende Antriebswelle (16) enthält, die antreibbar mit dem Motor verbunden sind; wobei die rotierende Antriebswelle (16) aufweist:
ein erstes Wellenelement (22) mit einem Basisende (22a), das antreibbar mit dem Motor (12) verbunden ist und weiterhin ein Spitzenende (22b) aufweist;
ein zweites Wellenelement (24) mit einem Basisende (24a), das antreibbar mit dem Spitzenende (22b) des ersten Wellenelements (22) verbunden ist, und weiterhin ein Spitzenende (24b) aufweist, an dem ein Bearbeitungsbauteil (20) angebracht ist;
und ein elastisches Element (40), das zwischen dem ersten Wellenelement (22) und dem zweiten Wellenelement (24) angeordnet ist, um eine Bewegung des zweiten Wellenelements (24) in Richtung des ersten Wellenelements (22) zu gestatten, während es elastisch verformt wird;
wobei das Spitzenende (22) des ersten Wellenelements (22) eine erste Gleitfläche aufweist, die sich parallel zu einer Längsachse der rotierenden Antriebswelle (16) erstreckt, und das Basisende (24a) des zweiten Wellenelements (24) eine zweite Gleitfläche aufweist, die sich parallel zur Längsachse erstreckt und gleitend mit der ersten Gleitfläche in Eingriff bringbar ist, so dass das gleitend in Eingriff bringen der ersten Gleitfläche und der zweiten Gleitfläche dem zweiten Wellenelement (24) gestattet, relativ zum ersten Wellenelement (22) in einer Richtung der Längsachse verschoben zu werden, und relativ zum ersten Wellenelement (22) in einer Drehrichtung der rotierenden Antriebswelle (16) fixiert zu werden;
wobei das Spitzenende (22b) des ersten Wellenelements (22) einen Vorsprung (28) und eine Ausnehmung aufweist, die sich in Richtung der Längsachse erstrecken und die gleitend miteinander in Eingriff bringbar sind, wobei die erste Gleitfläche ausgebildet ist auf einer Seitenfläche des einen von dem Vorsprung (28) und der Ausnehmung, wobei das Basisende (24a) des zweiten Wellenelements (24) ein anderes von dem Vorsprung /28) und der Ausnehmung aufweist, und die zweite Gleitfläche auf einer Seitenfläche des anderen von dem Vorsprung (28) und der Ausnehmung ausgebildet ist; und
**dadurch gekennzeichnet, dass** der Vorsprung (28) mit einem Schlitz (36) versehen ist, der sich dadurch in einer Richtung erstreckt, die die Längsachse durchkreuzt und in Richtung der Längsachse verlängert ist, wobei die Ausnehmung mit einem Wellenteil (34) versehen ist, der sich in der Richtung erstreckt, die die Längsachse durchkreuzt und im Schlitz (36) in dem Vorsprung (36) aufgenommen ist.

2. Rotationsbearbeitungswerkzeug nach Anspruch 1, wobei mindestens eines von dem ersten Wellenelement (22) und dem zweiten Wellenelement (24) ein das elastische Bauteil aufnehmendes Loch aufweist, das sich in Richtung der Längsachse erstreckt, wobei das elastische Bauteil eingesetzt und gehalten wird in dem das elastische Bauteil aufnehmenden Loch, so dass ein Ende des elastischen Bauteils an dem ersten Wellenelement (22) anliegt und dass ein anderes Ende des elastischen Bauteils an dem zweiten Wellenelement (24) anliegt.

3. Rotationsbearbeitungswerkzeug nach Anspruch 1 oder 2, weiterhin aufweisend ein rohrförmiges Wellenhalteelement, das sich vom Werkzeugkörper (14) in Richtung der Längsachse erstreckt, um äußere periphere Flächen des ersten Wellenelements (22) und des zweiten Wellenelements (24) abzudecken; ein erstes Lagerelement, das von einer inneren peripheren Fläche des Wellenhalteelements gehalten wird, um das erste Wellenelement drehbar zu tragen; und ein zweites Lagerelement, das von einer inneren peripheren Fläche des Wellenhalteelements gehalten wird, um das zweite Wellenelement (24) drehbar zu tragen.

## Revendications

1. Outil d'usinage rotatif comprenant un corps d'outil (14) incorporant un moteur (12) et un arbre d'entraînement rotatif (16) relié au moteur de façon à pouvoir être entraîné ;
l'arbre d'entraînement rotatif (16) comprenant :
un premier élément d'arbre (22) ayant une extrémité de base (22a) reliée au moteur (12) de façon à pouvoir être entraînée et ayant en outre une extrémité de pointe (22b) ;
un second élément d'arbre (24) ayant une extrémité de base (24a) reliée à l'extrémité de pointe (22b) du premier élément d'arbre (22) de façon à pouvoir être entraînée et ayant en outre une extrémité de pointe (24b) à laquelle un élément d'usinage (20) est fixé ; et
un élément élastique (40) placé entre le premier élément d'arbre (22) et le second élément d'arbre (24) pour permettre un mouvement du second élément d'arbre (24) vers le premier élément d'arbre (22) tout en étant déformé élastiquement ;
l'extrémité de pointe (22b) du premier élément d'arbre (22) ayant une première surface de coulissement s'étendant parallèlement à un axe longitudinal de l'arbre d'entraînement rotatif (16), et l'extrémité de base (24a) du second élément d'arbre (24) ayant une seconde surface de coulissement s'étendant parallèlement à l'axe longitudinal et apte à s'engager de manière coulissante avec la première surface de coulissement, de telle sorte qu'un engagement coulissant de la première surface de coulissement et de la seconde surface de coulissement permet au second élément d'arbre (24) d'être déplaçable par rapport au premier élément d'arbre (22) dans une direction de l'axe longitudinal et d'être fixe par rapport au premier élément d'arbre (22) dans une direction de rotation de l'arbre d'entraînement rotatif (16) ;
l'extrémité de pointe (22b) du premier élément d'arbre (22) ayant l'un d'une saillie (28) et d'un évidement qui s'étendent dans la direction de l'axe longitudinal et qui sont aptes à s'engager de manière coulissante l'un avec l'autre, la première surface de coulissement étant formée sur une surface latérale de celui de la saillie (28) et de l'évidement, l'extrémité de base (24a) du second élément d'arbre (24) ayant un autre de la saillie (28) et de l'évidement, et la seconde surface de coulissement étant formée sur une surface latérale de l'autre de la saillie (28) et de l'évidement ; et
**caractérisé par le fait que** la saillie (28) comporte une fente (36) s'étendant à travers celle-ci dans une direction traversant l'axe longitudinal et allongée dans la direction de l'axe longitudinal, l'évidement comportant une partie arbre (34) s'étendant dans la direction traversant l'axe longitudinal et reçue dans la fente (36) dans la saillie.

2. Outil d'usinage rotatif selon la revendication 1, dans lequel au moins l'un du premier élément d'arbre (22) et du second élément d'arbre (24) a un trou de réception d'élément élastique s'étendant dans la direction de l'axe longitudinal, l'élément élastique étant introduit et retenu dans le trou de réception d'élément élastique de telle sorte qu'une extrémité de l'élément élastique est en butée contre le premier élément d'arbre (22) et qu'une autre extrémité de l'élément élastique est en butée contre le second élément d'arbre (24).

3. Outil d'usinage rotatif selon la revendication 1 ou 2, comprenant en outre : un élément de retenue d'arbre tubulaire s'étendant à partir du corps d'outil (14) dans la direction de l'axe longitudinal de façon à recouvrir des surfaces périphériques externes du premier élément d'arbre (22) et du second élément d'arbre (24) ; un premier élément de palier retenu par une surface périphérique interne de l'élément de retenue d'arbre pour supporter en rotation le premier élément d'arbre ; et un second élément de palier retenu par une surface périphérique interne de l'élément de retenue d'arbre pour supporter en rotation le second élément d'arbre (24).
